Europäisches Patentamt

(19) European Patent Office

Office européen des brevets

(11) Publication number: **0 069 582**
**B1**

(12) **EUROPEAN PATENT SPECIFICATION**

(45) Date of publication of patent specification: **13.11.85**

(21) Application number: **82303534.0**

(22) Date of filing: **06.07.82**

(51) Int. Cl.⁴: **C 09 D 3/48, C 09 D 5/02, C 25 D 13/06, C 08 F 2/24**

(54) Polymer dispersions and their use in coating compositions.

(30) Priority: **06.07.81 US 280309**
**06.07.81 US 280310**
**06.07.81 US 280311**
**06.07.81 US 280312**

(43) Date of publication of application:
**12.01.83 Bulletin 83/02**

(45) Publication of the grant of the patent:
**13.11.85 Bulletin 85/46**

(84) Designated Contracting States:
**AT BE CH DE FR GB IT LI NL SE**

(56) References cited:
**GB-A-1 307 585**
**GB-A-1 515 723**
**US-A-3 959 202**

(73) Proprietor: **IMPERIAL CHEMICAL INDUSTRIES PLC**
**Imperial Chemical House Millbank**
**London SW1P 3JF (GB)**
(73) Proprietor: **DULUX AUSTRALIA LTD**
**McNaughton Road**
**Clayton Victoria 3168 (AU)**

(72) Inventor: **Gibson, David Vincent**
**29, Sutherland Road**
**Armadale Victoria 3143 (AU)**
Inventor: **Swalwell, John Edward**
**9, Amelia Crescent**
**East Doncaster Victoria 3109 (AU)**
Inventor: **McKay, Garry Michael**
**1399, Dandenong Road**
**Chadstone Victoria 3148 (AU)**
Inventor: **Palluel, Auguste Louis Lucien**
**11, Bolton Crescent**
**Windsor Berkshire (GB)**
Inventor: **Redman, Richard Paul**
**10, Earley Hill Road**
**Reading Berkshire (GB)**

(74) Representative: **Kerr, Michael Arthur et al**
**Imperial Chemical Industries PLC Legal**
**Department : Patents PO Box 6 Bessemer Road**
**Welwyn Garden City Herts, AL7 1HD (GB)**

**Description**

This invention relates to aqueous polymer dispersions which are suitable for use in an electrodeposition coating process; to the preparation of the dispersions; and to the use of the dispersions in an electrodeposition coating process.

It is known from GB—A—1,515,723 to prepare stable aqueous dispersions of thermoplastic polymer particles which are useful as coating compositions, and comprise a blend of at least two different polymers. The dispersions are made by dissolving a thermoplastic polymer such as nitrocellulose in at least one polymerisable monomer of low water solubility, dispersing the solution in water in the presence of a surfactant and thereafter polymerising the monomer to form a stable dispersion of polymer particles. It is stated that the polymer obtained from the monomer is substantially non-grafted and non-crosslinked. For many purposes, however, it is desirable to employ a coating composition which can be thermoset after application to a substrate. Such purposes include the use of primer coatings for metals which are intended to afford good corrosion protection.

US—A—3,959,202 discloses blends of (A) certain proportions of a non-ionic, water-dilutable polyether polyol resin, (B) certain proportions of a vinyl emulsion polymer having certain functional reactive groups and (C) certain proportions of a compatible aminoplast cross-linking agent. However, there is no indication that the components (A), (B) and (C) are each present in discrete particles dispersed in water and there is no reference to the electrodeposition of such blends.

It is now established practice to apply primer coatings to metals by an electrodeposition process. One potential disadvantage of such a process is that, due for example to different electrical behaviour, distinct particles of different material intended to form in combination the final coating, and contained in a composition to be applied by electrodeposition, may deposit on the substrate in a ratio which is different from that ratio present in the coating composition. We have now found that useful thermoset coatings can be produced by electrodeposition, when all of the ingredients for a specific type of thermoset coating are contained within the same particle. A further advantage of the use of such particles in that the dispersed ingredients of the coating composition which are co-reactive, for example in a subsequent heating stage, are in intimate association with each other in contrast to dispersions in which different coreactive materials present as distinct particles may deposit unevenly on the substrate.

The invention provides an aqueous polymer dispersion, for use in an electrodeposition process, wherein disperse polymer particles are cationically, anionically or non-ionically stabilised in an aqueous medium and each of the particles comprises:

(a) a polymeric modifier which is a resinous thermosettable hydroxyl group-containing polymer of molecular weight at least 500,

(b) an addition polymer which has been prepared from monomers which comprise at least one monomer containing a hydroxyl, amino, carboxyl, epoxide, amido or n-butoxymethylamido group, and

(c) a crosslinking agent which comprises groups reactive with the groups defined in (a) and (b).

Preferably the dispersion is prepared by a process wherein there is first produced in an aqueous medium a dispersion of cationically, anionically or non-ionically stabilised particles each of which particles comprises:

(i) a preformed polymeric modifier as above defined,

(ii) polymerisable αβ-ethylenically unsaturated monomer or monomers, at least one monomer containing a hydroxyl, amino, carboxyl, epoxide, amido or n-butoxymethylamido group, said preformed polymer being dissolved in said monomer or monomers, and

(iii) a crosslinking agent which comprises groups reactive with the groups defined in (i) and (ii),

and the polymerisable monomer or monomers is/are polymerised to produce *in situ* an addition polymer.

Preferably the polymerisation is carried out under conditions which are not conducive to significant interaction of the reaction groups of (i), (ii) and (iii), for example at temperatures close to ambient. Under such conditions it is believed that grafting of the addition polymer onto the preformed polymer modifier does not occur to any major or even significant extent and it is preferred to employ components (a) and (b) in which there is no significant grafting.

The dispersions of this invention may be prepared by certain alternative but less suitable processes, for example in which the different components are mixed in a non-aqueous medium.

The invention also provides a process of coating an article by electrodeposition which employs the above dispersions wherein the article is made one electrode in an electrical circuit.

In referring to a dispersion of cationically, anionically or non-ionically stabilised particles in an aqueous medium we mean that the stabilisation of the disperse particles in the aqueous medium is substantially due respectively to the presence of cationic or anionic groups and their counter-ions or non-ionic groups, the groups being present in or associated with one or more components of the particle. Thus, for example, there may be present in and/or associated with the disperse particles or with a component

thereof a distinct cationic, anionic or non-ionic surfactant; alternatively suitable stabilising groups may be present in one or more of the components of the disperse particle. In general the same cationic or anionic groups and their counter-ions or the same non-ionic groups will be responsible for the stability of the disperse particles in the aqueous polymer dispersion of this invention as well as of the intermediate dispersion of particles used in the preferred preparative process described above, i.e. during in situ polymerisation of the ethylenically unsaturated monomer(s). The stability of the dispersion is to be determined primarily by only one of the three types of stabilising means discussed. A small proportion of the two other types may be present and/or associated with the disperse particles but such groups do not play a primary role in the stabilisation of the disperse particles.

In one embodiment of a coating process according to the invention, wherein a composition comprising cationically stabilised disperse particles is electrodeposited on an article as cathode, it is required that particles stabilised in an aqueous medium at a pH of say 6 or less are destabilised under the conditions which prevail in the region of the cathode, for example at a pH of 10—11. It should be noted that in order to achieve satisfactory deposition at a cathode with a polymer dispersion according to this invention it is necessary to ensure that the stabilisation of the dispersion is not unduly enhanced by the presence of a non-ionic group, for example a poly-(ethylene oxide) group. Similar considerations apply to the deposition of an anionically stabilised dispersion at an anode at, say, pH 7 which may be destabilised at, say, pH 4.

The selection of the appropriate components, polymeric modifier, addition polymer—which is preferably derived from monomer or monomers which are polymerised in the above-preferred process to give addition polymer formed in situ—and crosslinking agent, will depend upon a number of factors; for example, the effective film-forming temperature which is required of the blend if polymeric modifier, addition polymer, and crosslinking agent before crosslinking is effected; the properties of an ultimate crosslinked coating, e.g. hardness or flexibility; the presence of suitable complementary reactive groups to enable crosslinking; the conditions under which crosslinking is to be achieved; or the compatibility of the components.

A group which is present in a monomer used to prepare the addition polymer and is reactive with the crosslinking agent is selected from hydroxyl, amino, carboxyl, epoxide, amido and n-butoxymethylamido groups.

Suitable combinations of reactive groups which can enable crosslinking include for example hydroxyl groups which are reactive with methylol, alkylated methylol or β-hydroxyester groups; hydroxyl or epoxy groups which are reactive with carboxyl groups; and hydroxyl or amino groups which are reactive with isocyanate groups.

In general it is arranged that these groups, when present, will not be reacted under the conditions of preparing the dispersion of polymer particles from the desired components, for example during the polymerisation of the ethylenically unsaturated monomer by the above described process, although there is not excluded the case where a small extent of useful crosslinking may occur when desired, for example under the conditions of addition polymerisation.

By a polymeric modifier we mean a resinous, preferably non-plasticising, hydroxyl group-containing polymer which will usually contribute to the essential properties, usually the hardness, of an ultimate crosslinked thermoset coating obtained from a coating composition according to the invention. Preferably the polymeric modifier is of molecular weight least 700 and contributes significantly to the chemical resistance of the coatings obtained. Particularly suitable polymeric modifiers are the hydroxyl group-containing epoxy resins (for example derived from epichlorhydrin and diphenylolpropane- or derivatives thereof, for example the modifier may be an epoxy resin in which the epoxide groups have been reacted but will contain hydroxyl groups and will have the characteristic desirable polymer structure of the epoxy resin. Other polymeric modifiers include, for example, alkyd resins and certain polyester or addition polymers e.g. styrene/allyl alcohol copolymers. Typical further reactive groups which may be present in these polymers which are reactive with crosslinking agents include amino, epoxide and carboxyl groups. More than one polymeric modifier may be used.

When the preformed polymeric modifier is used in the preferred process described above it is preferably completely soluble in the ethylenically unsaturated monomer(s) but since it is the compatibility of preformed polymer and polymerised monomer which is usually desired, the preformed polymer may not be completely soluble in the monomer(s). A mixture of preformed polymeric modifiers may be used, for example containing different reactive groups, or some modifier may be free from reactive groups.

Suitable ethylenically unsaturated monomers containing reactive groups such as hydroxyl, amido, and carboxyl groups include hydroxyisopropyl methacrylate, hydroxyethyl acrylate, hydroxybutyl acrylate, acrylamide, acrylic acid. These monomers may be used to prepare the addition polymer component of the disperse particles, and are suitable monomers to use in the process above described.

Suitable ethylenically unsaturated monomers which are copolymerisable with monomers containing reactive groups such as those just mentioned include methyl methacrylate, butyl acrylate, butyl methacrylate, ethyl acrylate, 2-ethylhexyl acrylate and styrene. Preferably the monomers hava a maximum solubility in water of 10% by weight at 25°C.

When the dispersion of polymer particles is prepared by the process earlier described, the crosslinking agent is selected, in conjunction with the initiator system for the ethylenically unsaturated monomer, bearing in mind that crosslinking should not occur to any significant extent at the temperature of the polymerisation stage.

Suitable crosslinking agents for use in the preparation of the polymer particles include urea-, ·melamine- and benzoguamine-formaldehyde, and phenolformaldehyde resins; multifunctional isocyanates or modified isocyanates such as blocked or capped isocyanates; and β-hydroxyester-containing materials such as described in European Patent Application 0 040 869. Preferably, in the process described above, the crosslinking agent is dissolved in the ethylenically unsaturated monomer together with the polymer modifier.

In one aspect of this invention the cationic stabilisation of the disperse particles is substantially due to cationic groups which are contained in or are associated with one or more of the components of the particles. Further materials may also require to be present in the dispersion, for example acids such as acetic or phosphoric acid to cause ionisation of basic groups. In one case the cationic stabilisation may be due to the presence of a distinct cationic surfactant associated with the particle, for example of a conventional type such as a fatty amine salt, for example a lower alkyl salt of a fatty mono- or diamine. Suitable such salts include the acetate salts of tallow and oleyl fatty primary amines. Certain distinct polymeric cationic surfactants may also be used for example addition copolymers which comprise a basic nitrogen atom such as a copolymer of 2-ethylhexyl acrylate/methylmethacrylate/hydroxyethyl methacrylate/dimethylaminoethyl methacrylate.

Alternatively the cationic stabilisation may be due to a modification of at least part of the modifier so that it comprises cationic groups which contribute to or are responsible for stabilisation. As an example, when the polymeric modifier is an epoxy resin comprising epoxide groups and/or hydroxyl groups at least part, for example 25—50%, or even up to 100% of the epoxide groups may be reacted with an amine to introduce basic groups. A suitable amine is, for example diethanolamine, although a wide range of other amines may be employed. An acid such as acetic or phosphoric acid is then employed to cause ionisation of the basic groups. It may also be desired to react at least part and preferably all of the remaining unreacted epoxide groups with a masking agent, for example with phenol, in order for example to avoid reaction of such groups when the dispersion is stored. The addition polymer also may contain stabilising groups of the type described.

It is an advantage that at least part of the polymeric modifier contains the stabilising groups since when used in coating compositions these groups are substantially buried in the ultimate crosslinked coating. This may not be the case when the stabilisation is provided by a distinct monomeric or low molecular weight surfactant which may be responsible for weakness in the ultimate film, for example under acid conditions.

In another aspect of the invention the stability of the disperse particles is substantially due to anionic groups which are contained in or are associated with one or more of the components of the particles. In one case the anionic stabilisation may be due to the presence of a distinct anionic surfactant associated with the particle, for example of a conventional type such as the amine or alkali metal salt, preferably the triethanolamine salt or fatty acids such as oleic or stearic acid; of alkylaryl sulphonates e.g. dodecyl benzene sulphonic acid or of the monophosphate of a lauryl alcohol/ethylene oxide condensate; or of sodium di-alkyl sulphosuccinate.

It is particularly preferred that the anionic stabilisation of the disperse particles is substantially due to a polymeric surfactant which comprises carboxyl groups. Further materials may also require to be present in the dispersion, for example inorganic bases or water-soluble amines such as triethanolamine in order to cause ionisation of the carboxyl groups. Examples of such a surfactant include, for example, copolymers of acrylic or methacrylic acid with, for example, monomer selected from lower alkyl $(C_{1-8})$ acrylates or methacrylate, e.g. methyl methacrylate, butyl acrylate, or ethyl acrylate; or with styrene. One suitable copolymer is a 20/40/40 copolymer of acrylic acid/methyl methacrylate/butyl acrylate. Another example of a suitable polymeric surfactant is a meleinised butadiene polymer. The aqueous dispersion may comprise, for example, 2—20% by weight of this type of polymeric surfactant based on the total weight of the disperse particles. Hydroxy-containing monomer may be used.

The polymeric surfactant may also be derived at least in part from a material which serves also as a polymeric modifier component, for example at least part of the polymeric modifier may be modified so that it comprises carboxyl groups. When the polymeric modifier is, for example, an epoxy resin comprising hydroxyl groups and epoxide groups, a proportion of the expoxide groups, e.g. 25—50% may be reacted with a reactant known to those in the art which will introduce carboxyl groups. It may also be desired to react at least part of any remaining unreacted epoxide groups in an epoxy resin as polymeric modifier with a masking agent, for example with benzoic acid, in order for example to avoid reaction of such groups when the dispersion is stored. The addition polymer (b) also may contain stabilising groups.

As mentioned above it is an advantage that at least part of the polymeric modifier contains the carboxyl stabilising groups since the carboxyl groups are substantially buried in the ultimate crosslinked coating. This may not be the case when anionic stabilisation is provided by a distinct monomeric or low molecular weight anionic surfactant.

In another aspect of the invention the stabilisation of the disperse particles is substantially due to non-ionic groups which are contained in or are associated with one or more of the components of the particles. Further materials may also require to be present in the dispersion which affect the stability of the dispersion or its method of use. In one case the non-ionic stabilisation may be due to the presence of a distinct non-ionic surfactant associated with the particle, for example of a conventional type such as ethylene oxide condensates of long chain fatty acids and alcohols, for example 35 mols. ethylene oxide reacted with oleic acid or oleyl alcohol; or bisphenol A, and certain distinct polymeric non-ionic surfactants may also be used for example addition copolymers which comprise a non-ionic hydrophilic group.

Alternatively the non-ionic stabilisation may be due to a modification of at least part of the polymeric modifier whereby at least part of the polymeric modifier comprises non-ionic groups which contribute to or are responsible for stabilisation. As an example, when the polymeric modifier is an epoxy resin comprising epoxide groups and hydroxyl groups at least part, for example 25—50% of the epoxide groups may be reacted with a poly(ethylene glycol). It may also be desired to react at least part of the remaining unreacted epoxide groups with a masking agent, for example with phenol, in order for example to avoid reaction of such groups when the dispersion is stored. The addition polymer (b) also may contain stabilising groups.

The disperse polymer particles may contain a high proportion of polymeric modifier, for example up to 75% by weight based on the total solids content.

The disperse polymers themselves or the aqueous medium in which they are dispersed may contain conventional ingredients, for example such as are used in coating compositions. These ingredients include pigment, flow promoter, or coalescing solvent.

Preferably, the particles are in the size range 0.05—5 μm diameter, more preferably 0.1—1 μm.

When the stabilisation of the disperse particles is due to a distinct cationic, anionic or non-ionic surfactant, i.e. a surfactant which is distinct from and substantially different from the defined components (a), (b) and (c) of the disperse particles, the proportion of the surfactant may be, for example, in the range 2—10% by weight based on the weight of the disperse particles. The stabilisation may be due also to the presence of a distinct surfactant together with stabilising groups present in another component of the particle as described above.

The relative proportions of polymeric modifier, addition polymer and crosslinking agent which are present in the disperse particles may vary widely depending upon the properties required, for example, in a final coating. Typical proportions are 5—80% by weight of the polymeric modifier; 20—95% by weight of the addition polymer and 5—40% by weight of the crosslinking agent, all based on the combined weight of these components.

The invention is illustrated by the following Examples in which parts and percentages are by weight.

Example 1

This Example illustrates the preparation of a cationically stabilised aqueous polymer dispersion, and its use in an electrodeposition coating process, in which a preformed polymeric modifier is an epoxy resin containing epoxide and hydroxyl reactive groups; the addition polymer is one which contains n-butoxymethylamido reactive groups of similar chemical type to those in the epoxy resin; and a crosslinking agent which is a urea-formaldehyde resin containing alkylated methylol groups which are co-reactive with the epoxide and/or hydroxyl and n-butoxymethyl groups; there being present a distinct cationic surfactant.

80 parts of an epoxy resin having an epoxide equivalent of 900 (i.e. 900 g of resin contain 1 g equivalent of epoxide; commercially available as "Epikote" 1004; "Epikote" is a Registered Trade Mark of Shell Chemicals) were dissolved with the application of heat in a monomer mixture consisting of 66 parts of methyl methacrylate, 44 parts of butyl acrylate and 10 parts of n-butoxymethyl acrylamide. To this solution was added 22.2 parts of a urea-formaldehyde resin (commercially available as "Beetle" UFR 80 at 96% solids content. "Beetle" is a Registered Trade Mark of Cyanamid), 12 parts of an alkylamine flow agent (commercially available as "Ethomeen" C12; "Ethomeen" is a Registered Trade Mark) and 2 parts of cumene hydroperoxide as radical polymerisation initiator, and the total solution was emulsified in 460 parts of water containing 32 parts of a cationic surfactant (commercially available as "Duomac" T; "Duomac" is a Registered Trade Mark) using a high shear stirrer. A solution of 0.8 part of ascorbic acid in 40 parts of water was then added to the emulsion thus obtained and radical-initiated addition polymerisation allowed to proceed in the presence of the redox couple which exothermed in the temperature range 25—50°C.

The polymerised product was dialysed to remove unwanted ionic species and was then diluted with water to yield a polymer dispersion of 15% solids.

When a steel cathode (which had been pretreated with zinc phosphate) was immersed in the diluted dispersion at pH 6 and an electric current was passed at 200 volts for 120 secs. between the cathode and a steel anode, also immersed in the dispersion, a coating film was deposited on the cathode. The components of the disperse particles deposited on the cathode were in the same proportions as in the disperse particles of the original coating composition. The cathode was rinsed, and heated at 180°C for 1/2 hour to yield a coating affording good protection to the metal, for example in the ASTM salt spray test.

Example 2

This Example illustrates the preparation and use of an aqueous polymer dispersion in which the preformed polymeric modifier is an epoxy resin wherein epoxide groups are modified to provide basic groups which contribute to the stability of the dispersion in the aqueous phase and wherein there are reactive hydroxyl groups; the addition polymer formed *in situ* contains reactive hydroxyl groups; and the cross-linking agent is a urea-formaldehyde resin containing co-reactive alkylated methylol groups.

(a) an adduct of an epoxy resin was first prepared by reacting 380 parts of an epoxy resin of epoxide equivalent (commercially available as "Epikote" 828; "Epikote" is a Registered Trade Mark) with 164 parts of phenol and 26.5 parts of diethanolamine at 160—180°C for 2 hours. The adduct was cooled to about 80°C and then dissolved in a mixture of 470 parts methyl methacrylate, 314 parts butyl acrylate and 71 parts of hydroxy isopropyl methacrylate. 200 parts of the resin solution thus prepared were mixed to form a solution with 42 parts of a urea-formaldehyde resin commercially available as "Beetle" UFR 80, 12 parts of an alkylamine flow agent commercially available as "Ethomeen" C12, 2 parts of cumene hydroperoxide and 2.1 parts acetic acid. This solution was then added to 200 parts water whilst subjecting to high shear stirring for 5 minutes and a further 300 parts of water then added whilst maintaining high shear stirring to produce an emulsion.

A solution of 0.8 part ascorbic acid in 4.0 parts of water was added with gentle stirring to the emulsion and polymerisation allowed to proceed under the exotherm conditions. When cool, a further 200 parts of water was added to the resulting product which was dialysed to yield a product of 23% solids content.

The product was diluted to 15% solids and electro-deposited onto a zinc phosphated steel cathode at 200 volts for 2 minutes. The coated panel was stoved at 180°C for 30 minutes to give a smooth glossy film of thickness 22 microns.

(b) The dispersion prepared above was also pigmented and then applied by electrodeposition to a zinc phosphated steel cathode to give a coating affording good protection to the metal. The dispersion was pigmented by replacing the 42 parts of urea formaldehyde resin ("Beetle" UFR 80) with 80 parts of a millbase prepared by ballmilling 118 parts of the urea-formaldehyde resin with 63 parts n-butanol, 203 parts titanium dioxide (commercially available as "Tipure" R900; "Tipure" is a Registered Trade Mark) and 4 parts of a black pigment (commercially available as "Philblack" APF) and diluting the product with a further 194 parts of the urea-formaldehyde resin.

Example 3

This example illustrates the preparation and use of a non-ionically stabilised dispersion based on a polyester as modifying polymer according to the invention.

| | Parts | |
|---|---|---|
| Polyester solution (1) | 15.70 | (A) |
| Methyl methacrylate | 1.55 | |
| Butyl acrylate | 1.87 | |
| Styrene | 2.52 | |
| Hydroxypropyl methacrylate | 2.52 | |
| Acrylic acid | 1.01 | |
| Melamine/formaldehyde resin* (water-insoluble, highly methylated) | 6.29 | |
| Non-ionic surfactant stabiliser (nonylphenol/40 mols ethylene oxide) | 3.15 | |
| Cumene hydroperoxide | 0.25 | (B) |
| Demineralised water | 5.66 | (C) |
| Demineralised water | 54.30 | (D) |
| Sodium ascorbate | 0.15 | (E) |
| Demineralised water | 5.03 | |

*(Commercially available as "Cymel" 303; "Cymel" is a Registered Trade Mark).

A polyester resin (1) made from neopentyl glycol, adipic acid, isophthalic acid, terephthalic acid and trimellitic anhydride in the mole ratios 1.11:0.42:0.30:0.05:0.11 was dissolved in a 1:1 weight ratio mixture of methyl methacrylate and butyl acrylate to give an 80.5% solution.

The components A were mixed and warmed to dissolve the stabiliser. B was added and the mixture dispersed in C with high speed mixing. The resulting emulsion was diluted with D and E was added to initiate polymerisation at just above ambient temperature. The final product was a white stable emulsion.

Example 4

This Example illustrates the preparation and use of a non-ionically stabilised dispersion based on an epoxy resin as modifying polymer according to the invention.

"Epikote" 1009 (a commercially available epoxy resin containing hydroxyl groups; "Epikote" is a Registered Trade Mark) was dissolved in methyl methacrylate and butyl acrylate to give a solution containing 55% "Epikote" 1009, 29% methyl methacrylate and 16% butyl acrylate.

The following components were then added in order to 29.8 parts of this epoxy/monomer solution.

(a) 6.6 parts of methyl methacrylate, 2.7 parts of butyl acrylate, 2.1 parts of hydroxypropyl methacrylate, 0.8 part of methacrylic acid, 7.4 parts of a water-insoluble urea-formaldehyde resin (commercially available as "UFR 80"), and 0.7 parts of t-butyl perbenzoate.

(b) 2.5 parts of the nonyl/phenol/40 mols ethylene oxide non-ionic surfactant used in Example 3.

The resulting solution was then added to 9.5 parts of demineralised water under high speed mixing and the dispersion formed was then further diluted with 32.6 parts of demineralised water to give a dispersion of droplets of diameter 1.5 μm maximum. Polymerisation was initiated by adding a solution of 0.3 part of sodium ascorbate in 5.0 parts of demineralised water. The dispersion exothermed and the final product was a white stable emulsion.

Example 5

This Example illustrates the preparation and use of anionically stabilised aqueous polymer dispersion stabilised with the salt of a long chain fatty acid.

40 parts of an epoxy resin of epoxide equivalent 500 (commercially available as "Epikote" 1001; "Epikote" is a Registered Trade Mark) which had been pre-reacted with 2 equivalents of benzoic acid were dissolved with heating in a monomer mixture of 30 parts methyl methacrylate; 15 parts butyl acrylate; 15 parts hydroxyethyl methacrylate; 25 parts of a benzoguanamine formaldehyde resin (commercially available as "Cymel 1125") were added together with 2 parts of cumene hydroperoxide, 7.5 parts of oleic acid and 4 parts of triethanolamine. The whole was emulsified in 80 parts of demineralised water and the emulsion diluted with 200 parts of demineralised water.

A solution of 0.6 part ascorbic acid and 0.3 part ferrous sulphate in 50 parts water were added to the emulsion and radical-initiated polymerisation was allowed to proceed in the presence of the redox couple which exothermed in the temperature range 25—50°C. A stable, aqueous dispersion of anionically stabilised polymer particles was produced.

Example 6

This Example illustrates the preparation of an anionically stabilised aqueous polymer dispersion according to the invention in which the stabiliser is a carboxyl-containing addition copolymer.

40 parts of an epoxy resin of epoxide equivalent 500 (commercially available as "Epikote" 1001) which had been pre-reacted with 2 equivalents of benzoic acid (to mask the epoxide groups) were dissolved with heating in a monomer mixture of 30 parts methyl methacrylate, 15 parts butyl acrylate and 15 parts of hydroxyethyl methacrylate. 25 parts of a benzoguanamine-formaldehyde resin (commercially available as "Cymel" 1125), 2 parts of cumene hydroperoxide, and 20 parts of a copolymer (acrylic acid/methyl methacrylate/butyl acrylate=20/40/30) as a 50% by weight solution in butyl cellosolve were then added and the whole emulsified in 80 parts demineralised water with five parts of triethanolamine. The resulting emulsion was diluted with 200 parts demineralised water.

A solution of 0.6 part ascorbic acid and 0.3 part ferrous sulphate in 50 parts water were added to the emulsion and radical-initiated polymerisation was allowed to proceed in the presence of the redox couple which exothermed in the temperature range 25—50°C. A stable, aqueous dispersion of anionically stabilised particles was produced which, at the appropriate level of dilution, could be applied to an anodic metal substrate by electrodeposition.

Example 7

This Example illustrates the preparation of an anionically stabilised aqueous polymer dispersion according to the invention in which the stabiliser is a carboxyl group-containing addition polymer.

40 parts of an unmodified, commercially available diepoxide, "Epikote" 828, were dissolved in a monomer mixture of 33 parts methyl methacrylate, 22 parts butyl acrylate and 5 parts hydroxy isopropyl methacrylate. 20 parts of a melamine-formaldehyde resin, "Cymel" 1141, 1 part cumenehydroperoxide and 29 parts of a surfactant copolymer (acrylic acid/methyl methacrylate/butyl acrylate/hydroxyisopropyl methacrylate=20/30/30/30) as a 50% by weight solution in butyl cellosolve were added and the whole emulsified in 80 parts of demineralised water containing 1.6 parts of potassium hydroxide. The emulsion was diluted with 200 parts of demineralised water. A solution of 0.6 part ascorbic acid and 0.3 part ferrous sulphate in 50 parts demineralised water were added to the emulsion to initiate polymerisation.

The stable, aqueous dispersion with particle size 0.28 micron was used to deposit films on an anode in an electrodeposition bath, which when stoved showed good resistance to corrosion in a 21 day salt spray test with no undercutting or blistering at the scribes.

Example 8

Example 5 was repeated except that the oleic acid and triethanolamine used therein was replaced by 6 parts dodecylbenzenesulphonic acid and 3 parts of triethanolamine. As in Example 5, a stable aqueous dispersion of anionically stabilised polymer particles was produced.

## Claims

1. An aqueous polymer dispersion, for use in an electrodeposition process, comprising disperse polymer particles which are cationically, anionically or non-ionically stabilised in an aqueous medium, each particle comprising

(a) a polymeric modifier which is a resinous, thermosettable hydroxyl group-containing polymer of molecular weight at least 500

(b) an addition polymer which has been prepared from monomers which comprise at least one monomer containing a hydroxyl, amino, carboxyl, epoxide, amido or n-butoxymethylamido group, and

(c) a crosslinking agent which comprises groups reactive with the groups defined in (a) and (b).

2. An aqueous polymer dispersion according to claim 1 wherein the polymeric modifier is an epoxy resin or derivative thereof, or a polyester.

3. An aqueous polymer dispersion according to claim 1 or claim 2, wherein the crosslinking agent is selected from a urea/formaldehyde, a melamine/formaldehyde, a benzoguanamine formaldehyde, a multifunctional isocyanate (optionally blocked or capped) or a multifunctional ß-hydroxyester.

4. An aqueous polymer dispersion according to any one of claims 1 to 3, wherein the stabilisation of the particles is due at least in part to stabilising groups present in the polymeric modifier.

5. A process of coating an article by electrodeposition wherein there is employed an aqueous dispersion according to any one of claims 1—4.

## Revendications

1. Dispersion aqueuse de polymère à utiliser dans un procédé d'électrodéposition, comprenant des particules de polymère en dispersion qui sont stabilisées cationiquement, anioniquement ou non ioniquement dans un milieu aqueux, chaque particule comprenant:

(a) un modificateur polymère qui est un polymère résineux thermodurcissable contenant des radicaux hydroxyle d'un poids moléculaire d'au moins 500,

(b) un polymère d'addition qui a été préparé à partir de monomères qui comprennent au moins un monomère contenant un radical hydroxyle, amino, carboxyle, époxyde, amido ou n-butoxyméthylamide, et

(c) un agent de réticulution qui comprend des radicaux réactifs avec les radicaux définis en (a) et (b).

2. Dispersion aqueuse de polymère suivant la revendication 1, dans laquelle le modificateur polymère est une résine époxyde ou un dérivé de celle-ci ou bien un polyester.

3. Dispersion aqueuse de polymère suivant la revendication 1 ou 2, dans laquelle l'agent de réticulation est choisi entre une résine urée-formaldéhyde, une résine mélamineformaldéhyde, une résine benzoguanamine-formaldéhyde, un isocyanate multifunctionnel (éventuellement bloqué ou à radicaux terminaux) et un β-hydroxyester multifunctionnel.

4. Dispersion aqueuse de polymère suivant l'une quelconque des revendications 1 à 3, dans laquelle la stabilisation des particules est due au moins pour partie à des radicaux stabilisants présents dans le modificateur polymère.

5. Procédé de revêtement d'un produit manufacturé par électrodéposition, dans lequel on utilise une dispersion aqueuse suivant l'une quelconque des revendications 1 à 4.

## Patentansprüche

1. Wäßrige Polymerdispersion für die Verwendung in einem Elektroabscheidungsverfahren, welche disperse Polymerteilchen enthält, die kationisch, anionisch oder nichtionisch in einem wäßrigen Medium stabilisiert sind, wobei jedes Teilchen folgendes enthält:

(a) ein polymeres Modifiziermittel, bei dem es sich um ein harzartiges, thermisch härtbares, Hydroxylgruppen enthaltendes Polymer mit einem Molekulargewicht von mindestens 500 handelt,

(b) ein Additionspolymer, das aus Monomeren hergestellt worden ist, die mindestens ein Monomer umfassen, das eine Hydroxyl-, Amino-, Carboxyl-, Epoxid-, Amido- oder n-Butoxymethylamidogruppe enthält, und

(c) ein Vernetzungsmittel, das Gruppen enthält, die mit den unter (a) und (b) definierten Gruppen reaktiv sind.

2. Wäßrige Polymerdispersion nach Anspruch 1, bei welcher das polymere Modifiziermittel ein Epoxyharz oder ein Derivat davon oder ein Polyester ist.

3. Wäßrige Polymerdispersion nach Anspruch 1 oder 2, bei welcher das Vernetzungsmittel aus einem Harnstoff/Formaldehyd, einem Melamin/Formaldehyd, einem Benzoguanamin/Formaldehyd, einem multifunktionellen Isocyanate (gegebenenfalls blockiet oder abgekappt) oder einem multifunctionellen β-Hydroxyester ausgewählt ist.

4. Wäßrige Polymerdispersion nach einem der Ansprüche 1 bis 3, bei welcher die Stabilisierung der Teilchen zumindest teilweise aufgrund von Stabilisierungsgruppen stattfindet, die im polymeren Modifiziermittel vorliegen.

5. Verfahren zum Beschichten eines Gegenstands durch Elektroabscheidung, bei welchem eine wäßrige Dispersion nach einem der Ansprüche 1 bis 4 verwendet wird.